# EUROPÄISCHE PATENTANMELDUNG

(11) **EP 1 207 678 A2**
(43) Veröffentlichungstag der Anmeldung: **22.05.2002**
(21) Anmeldenummer: 01440362.0
(22) Anmeldetag: 26.10.2001
(51) Int. Cl.: H04M 15/00, H04L 12/14

(54) **Verfahren und Vorrichtungen zur Vergebührung von individuellen Verbindungskosten für ein an ein privates Telekommunikationsnetz angeschlossenes Endgerät eines Teilnehmers**

(30) Priorität: 18.11.2000 DE 10057248
(71) Anmelder: ALCATEL, 75008 Paris (FR)
(72) Erfinder: Lautenschlager, Wolfgang, 71287 Weissach-Flacht (DE); Weik, Hartmut, 70195 Stuttgart (DE)
(74) Vertreter: Rausch, Gabriele, Dr.

(57) **Zusammenfassung**

Die vorliegende Erfindung betrifft ein Verfahren zur Vergebührung von individuellen Verbindungskosten für ein an ein privates Telekommunikationsnetz (VPN1, VPN2, RPN) angeschlossenes Endgerät (T111-T13; T211-T222) eines Teilnehmers sowie ein Knotenpunkt-Programm-Modul (KPM) hierfür einen Netzknoten (SW2, PB22) hierfür, ein Gebühren-Programm-Modul (GPM) hierfür und eine Gebühreneinrichtung (ACC1, ACC2, SCP) hierfür.

Bei dem Verfahren wird in einer Gebühreneinrichtung (SCP, ACC2, ACC1) des privaten Telekommunikationsnetzes (VPN1, VPN2, RPN) für den Teilnehmer ein privates Konto eingerichtet. Von dem Endgerät (T111-T13; T211-T222) wird ein Verbindungswunsch zum Aufbau einer Verbindung sowie eine Abbuchungskennung an das private Telekommunikationsnetz (VPN1, VPN2, RPN) gesendet, mit der angegeben wird, dass die für die Verbindung anfallenden Verbindungskosten dem privaten Konto (KT211, KT212, KT222) zugerechnet werden sollen. Die Gebühreneinrichtung (SCP, ACC2, ACC1) rechnet die für die gewünschte Verbindung anfallenden Verbindungskosten dem privaten Konto (KT211, KT212, KT222) zu. Dazu wird vorgeschlagen, dass die von dem Teilnehmer gewünschte Verbindung nur dann aufgebaut wird und/oder nur solange gehalten wird, wenn bzw. wie auf dem privaten Konto (KT211, KT212, KT222) ein Guthaben vorhanden ist.

## Beschreibung

Die vorliegende Erfindung betrifft ein Verfahren zur Vergebührung von individuellen Verbindungskosten für ein an ein privates Telekommunikationsnetz angeschlossenes Endgerät eines Teilnehmers sowie ein Knotenpunkt-Programm-Modul hierfür einen Netzknoten hierfür, ein Gebühren-Programm-Modul hierfür und eine Gebühreneinrichtung hierfür.

In Firmen, Behörden oder sonstigen Organisationen sind private Telekommunikationsnetze installiert, über die organisationsinterne sowie auch ins öffentliche Telekommunikationsnetz führende Kommunikation durchgeführt wird. Ein privates Telekommunikationsnetz wird beispielsweise mittels einer oder mehrerer Nebenstellenanlagen gebildet und/oder von einem öffentlichen Telekommunikationsnetz als sogenanntes Virtuelles Privates Netz (VPN) bereitgestellt.

Für Kommunikationsverbindungen innerhalb eines privaten Telekommunikationsnetzes fallen im Allgemeinen keine Verbindungskosten an, während für Verbindungen ins öffentliche Netz teilweise erhebliche Gebühren fällig sind. Daher wird private Kommunikation von an das private Telekommunikationsnetz angeschlossenen Teilnehmer-Endgeräten beispielsweise durch sogenannte Sperrnummern eingeschränkt, so dass durch die Sperrnummern definierte Kommunikationspartner von dem jeweiligen Teilnehmer nicht mehr erreicht werden können. Andere allgemein bekannte Lösungen sehen vor, dass in einer Nebenstellenanlage für die angeschlossenen Teilnehmer privaten Konten eingerichtet werden. Für private Kommunikationsverbindungen anfallende Verbindungskosten werden dann den jeweiligen Konten belastet. Die Beträge werden angesammelt und z.B. monatlich vom jeweiligen Kontobesitzer eingefordert. Eine solche Lösung ist allerdings aus Datenschutzgründen sehr problematisch, da das private Kommunikationsverhalten des jeweiligen Teilnehmers leicht nachvollzogen werden kann. Ferner ist die Abrechnung mit dem Teilnehmer aufwendig und bei gegebenenfalls mangelnder Zahlungsfähigkeit des Teilnehmers für den Betreiber des privaten Telekommunikationsnetzes mit Verlust behaftet.

Es ist daher Aufgabe der vorliegenden Erfindung, individuelle Verbindungskosten für ein an ein privates Telekommunikationsnetz angeschlossenes Endgerät eines Teilnehmers unkompliziert und unter verbesserten Datenschutzbedingen zu vergebühren.

Diese Aufgabe wird gelöst durch ein Verfahren gemäß der technischen Lehre des Anspruchs 1.

Zur Lösung der Aufgabe sind ferner vorgesehen: ein Knotenpunkt-Programm-Modul gemäß der technischen Lehre des Anspruchs 13, ein Netzknoten gemäß der technischen Lehre des Anspruchs 15, ein Gebühren-Programm-Modul gemäß der technischen Lehre des Anspruchs 16 und eine Gebühreneinrichtung gemäß der technischen Lehre des Anspruchs 17.

Der Erfindung liegt dabei der Gedanke zugrunde, dass in einer Gebühreneinrichtung des privaten Telekommunikationsnetzes, beispielsweise in einer Nebenstellenanlage oder einem Gebührenrechner, für den Teilnehmer ein privates Konto eingerichtet ist, das als Guthaben-Konto ausgestaltet ist. Wenn der Teilnehmer eine private Kommunikationsverbindung über das private Telekommunikationsnetz aufbauen will, sendet er von dem Endgerät einen Verbindungswunsch zum Aufbau der Verbindung sowie eine Abbuchungskennung an das private Telekommunikationsnetz, mit der angegeben wird, dass die für die Verbindung anfallenden Verbindungskosten dem privaten Konto zugerechnet werden sollen. Die Gebühreneinrichtung rechnet die für die gewünschte Verbindung anfallenden Verbindungskosten dem privaten Konto zu. Allerdings wird die von dem Teilnehmer gewünschte Verbindung nur dann aufgebaut und/oder nur solange gehalten, wenn bzw. wie auf dem privaten Konto ein Guthaben vorhanden ist.

Der Teilnehmer kann das private Konto jederzeit z.B. per Scheck- oder Kreditkartenbuchung, per Electronic Cash, per Überweisung oder über eine sonstige Bezahlungsform mit einem Geldbetrag versehen. Der jeweilige Einzahler bei diesem Vorgang sowie der jeweilige Kontostand des privaten Kontos bleibt für den Betreiber des privaten Telekommunikationsnetzes zweckmäßigerweise unbekannt, so dass ein optimaler Datenschutz gewährleistet ist. Zudem steht dem Betreiber der Geldbetrag bereits im vorhinein zur Verfügung, so dass er nicht auf gegebenenfalls von Teilnehmer nicht erfüllten Forderungen sitzen bleibt.

Weitere vorteilhafte Ausgestaltungen der Erfindung finden sich in den abhängigen Ansprüchen sowie in der Beschreibung.

Das private Telekommunikationsnetz kann beispielsweise eine oder mehrere private Vermittlungsstellen aufweisen, die jeweils eines oder mehrere Endgeräte bedienen und die miteinander ummittelbar durch sogenannte Querleitungen (engl. tie lines) oder sonstige Verbindungen oder mittelbar über ein öffentliches Telekommunikationsnetz verbunden sind. Es ist zweckmäßigerweise auch möglich, dass das private Telekommunikationsnetz als ein Virtuelles Privates Netz (VPN) aufgebaut ist, das vorzugsweise durch ein als sogenanntes Intelligentes Netz ausgebildetes öffentliches Telekommunikationsnetz, z.B. ein leitungsgebundenes Telefonnetzwerk oder Mobilfunk-Netzwerk, bereitgestellt wird. Prinzipiell kann ein erfindungsgemäßes VPN jedoch auch auf einem Datennetzwerk, beispielsweise dem Internet oder einem sonstigen auf einem Internet-Protokoll basierenden, für Telekommunikation geeigneten Netzwerk, oder auf einem gemischten Daten- und Telefonnetzwerk installiert sein. Jedenfalls können Teilnehmer-Endgeräte an ein VPN unmittelbar oder über private Vermittlungsstellen angeschlossen werden.

Zweckmäßigerweise weist das private Telekommunikationsnetz anhand vorbestimmter Restriktionskriterien Verbindungswünsche des Teilnehmers zu vorbestimmten Zielen zurück, beispielsweise zu bestimmten Servicenummern oder zu Zielen im Ausland. Sofern der Teilnehmer einen dem privaten Konto zu belastenden Verbindungswunsch an das private Telekommunikationsnetz sendet, wendet dieses die Restriktionskriterien nicht oder nur in eingeschränktem Umfang auf den Verbindungswunsch an, so dass z.B. die vorgenannten Servicenummern für den Teilnehmer erreichbar sind.

Es ist auch möglich, dass die Restriktionskriterien den Aufbau der Verbindung über zumindest einen vorbestimmten Übertragungsweg an sich verbieten, so dass z.B. eine sogenannte Carrier-Selection für den Teilnehmer nicht möglich ist, bei der beispielsweise durch Wählen einer Netzbetreiber-Vorwahl ein vorbestimmter Netzbetreiber mit dem Aufbau der gewünschten Verbindung beauftragt wird. Eine solche Netzbetreiber-Vorwahl wird durch das private Telekommunikationsnetz z.B. deshalb abgeblockt, weil der Betreiber des privaten Netzes einen Exklusiv-Vertrag mit einem Netzbetreiber eines öffentlichen Telekommunikationsnetzes zum Aufbau von Kommunikationsverbindungen abgeschlossen hat. Jedenfalls ist in einer vorteilhaften Variante der Erfindung vorgesehen, dass das private Telekommunikationsnetz den Aufbau einer Verbindung, deren Verbindungskosten dem privaten Konto zurechnet werden, auch über an sich durch Restriktionskriterien gesperrte Übertragungswege erlaubt, so das die angeschlossenen Teilnehmer für private Kommunikation beispielsweise die vorgenannte Carrier-Selection vornehmen können.

In einer weiteren vorteilhaften Variante baut das private Telekommunikationsnetz die Verbindung bevorzugt auf einem durch den Teilnehmer vorbestimmten Übertragungsweg auf. Dazu ist beispielsweise eine Netzbetreiber-Vorwahl in einem Netzknoten oder in der Gebühreneinrichtung des privaten Telekommunikationsnetzes abgelegt.

Der bevorzugte Übertragungsweg kann auch im Zusammenhang mit einem Teilnehmerprofil abgelegt sein, das für den Teilnehmer in dem private Telekommunikationsnetz vorgesehen ist. Ein solches Teilnehmerprofil umfasst vorzugsweise auch weitere Präferenzen des Teilnehmers, z.B. ein persönliches Kurzwahlverzeichnis und/oder ein persönliches Telefonbuch und/oder eine Least-Cost-Routing-Tabelle des Teilnehmers.

In eine vorteilhaften Variante ist auch das private Konto Bestandteil des Teilnehmerprofils des Teilnehmers.

Prinzipiell sind mehrere Varianten zur Kontostandsinformation bezüglich des privaten Kontos möglich. Beispielsweise kann der Teilnehmer den Kontostand bei der Gebühreneinrichtung abfragen. Vorzugsweise jedoch sendet die Gebühreneinrichtung an das Endgerät eine Nachricht über den jeweiligen Stand des privaten Kontos. Das Endgerät kann dann den Stand visuell und/oder akustisch dem Teilnehmer anzeigen, so dass der Teilnehmer eine Verbindung gegebenenfalls aus eigener Initiative beenden kann, bevor sein Guthaben auf seinem Konto aufgebraucht ist.

Als Schutz gegen eine missbräuchliche Nutzung eines privaten Kontos sind verschiedene, einzeln oder in beliebigen Kombinationen durchführbare Maßnahmen möglich:

Der Teilnehmer kann eine persönliche, ihm zugeordnete Benutzer-Kennung als Abbuchungskennung für sein privates Konto an das private Telekommunikationsnetz senden. Dabei kann es sich beispielsweise um einen alphanumerischen Code handeln, der beispielsweise per DTMF-Signalisierung (Dual Tone MultiFrequency) oder mittels einer ISDN-UUS-Nachricht (ISDN = Integrated Services Digital Network / UUS = User-to-User Signalling) an das private Telekommunikationsnetz gesendet wird.

Als weitere Schutzmaßnahme kann ein Passwort, z.B. mittels obiger Benachrichtigungsmethoden, an das private Telekommunikationsnetz gesendet wird.

Es ist auch möglich, dass die Gebühreneinrichtung den Teilnehmer bei einem Zubuchungs- und/oder Abbuchungsvorgang zur Angabe einer Identifizierungskennung und/oder einer Authentifizierungskennung auffordert oder dass der Teilnehmer von sich aus bei den obengenannten Buchungen derartige Kennungen angibt.

Auch für private Kommunikationsverbindungen kann ein Teilnehmer die tariflichen Vorzüge des privaten Telekommunikationsnetzes nutzen. Für dieses sind häufig besonders günstige und lediglich für Verbindungen des jeweiligen privaten Telekommunikationsnetzes individuell geltende Gebührentarife vereinbart. Wenn ein Teilnehmer eine private, seinem privaten Konto zu belastende Verbindung über das private Telekommunikationsnetz und/oder über ein öffentliches Telekommunikationsnetz anfordert, werden zweckmäßigerweise die für diese Verbindung anfallenden Verbindungskosten nach dem für das private Telekommunikationsnetz individuell geltenden Gebührentarif ermittelt und dem privaten Konto belastet. Eine weitere Möglichkeit zu einem für den jeweiligen Teilnehmer kostenoptimierten Verbindungsaufbau wird zweckmäßigerweise dadurch geschaffen, dass die Verbindung bevorzugt auf Übertragungswegen des privaten Telekommunikationsnetzes aufgebaut wird, insbesondere auf Übertragungswegen zwischen Vermittlungsstellen des privaten Telekommunikationsnetzes. Bei dieser Variante wird berücksichtigt, dass private Telekommunikationsnetze häufig durch verteilte und miteinander vernetzte private Vermittlungsstellen und/oder durch Virtuelle Private Netze (VPN) gebildet werden. Die private Vermittlungsstellen sind dabei oft auch in unterschiedlichen öffentlichen Ortsnetzen angeordnet. Teilweise sind zwischen den privaten Vermittlungsstellen Übertragungswege vorgesehen, die auf Stand- oder Mietleitungen aufgebaut sind und daher Verbindungen zu besonders günstigen Gebührentarifen ermöglichen. Jedenfalls sind Übertragungswege zwischen Vermittlungsstellen oder sonstigen Telekommunikationseinrichtungen des privaten Telekommunikationsnetzes in Bezug auf anfallende Gebühren meist günstiger als Verbindungen über öffentliche Telekommunikationsnetze, wobei in der obengenannten vorteilhaften Variante möglichst diese günstigen Übertragungswege genutzt werden. Dabei wird dann eine Verbindung, die einem privaten Konto eines an eine erste private Vermittlungsstelle angeschlossenen Teilnehmers zu berechnen ist, beispielsweise auf einem Übertragungsweg aufgebaut, der zwischen der ersten und einer zweiten, in einem anderen öffentlichen Ortsnetzen befindlichen privaten Vermittlungsstelle vorhanden ist. Für diesen Übertragungsweg fallen keine oder jedenfalls günstige Gebühren an. Auf Seiten des öffentlichen Telekommunikationsnetzes fallen lediglich günstige Gebühren für einen im Ortsnetz der zweiten privaten Vermittlungsstelle aufgebauten Verbindungsabschnitt an.

Auch für auf einem privaten Telekommunikationsnetz aufgebaute Verbindungen oder Verbindungsabschnitte können einem privaten Konto prinzipiell Gebühren berechnet werden. Es ist aber auch möglich, dass diese Verbindungen oder Verbindungsabschnitte kostenlos sind und dass dem privaten Konto lediglich Gebühren berechnet werden, die für außerhalb des privaten Telekommunikationsnetzes aufgebaute Verbindungsabschnitte anfallen.

Im Folgenden werden die Erfindung und ihre Vorteile anhand eines Ausführungsbeispiels unter Zuhilfenahme der Zeichnung dargestellt.
- Figur 1: zeigt eine Anordnung zur Ausführung des erfindungsgemäßen Verfahrens mit als erfindungsgemäße Netzknoten ausgebildeten Vermittlungsstellen SW1, SW2, PB22, erfindungsgemäßen Gebühreneinrichtungen ACC1, ACC2 sowie Gebühren-Programm-Module GPM und Knotenpunkt-Programm-Module KPM.
- Figur 2: zeigt schematisch ein Knotenpunkt-Programm-Modul KPM.
- Figur 3: zeigt schematisch ein Gebühren-Programm-Modul GPM.

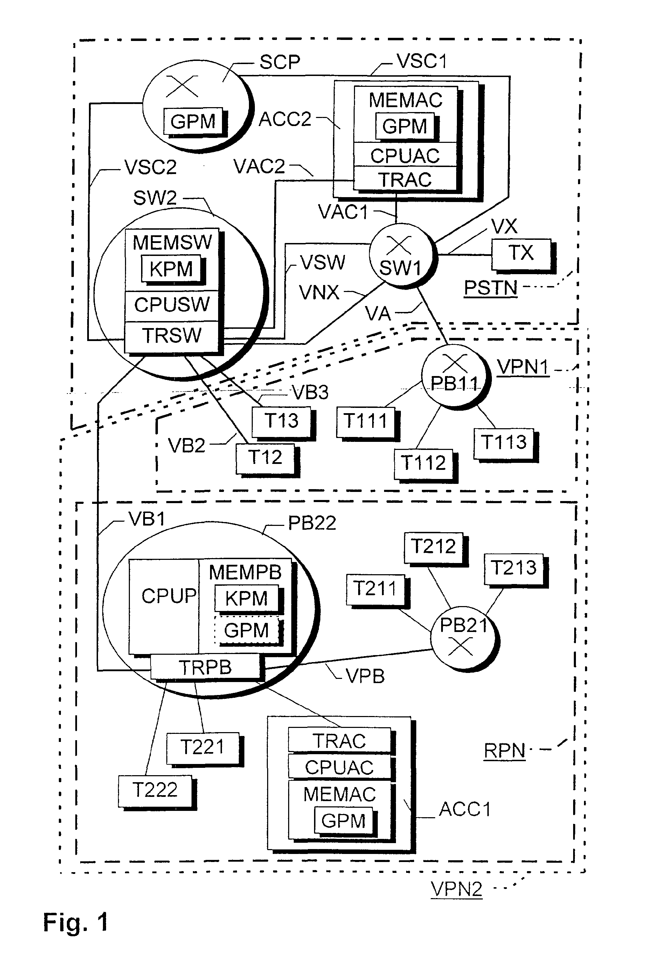

In Figur 1 ist eine beispielhafte Anordnung dargestellt, mit der die Erfindung ausgeführt werden kann. Figur 1 zeigt ein öffentliches Telekommunikationsnetz PSTN, sowie private Telekommunikationsnetze VPN1, VPN2 und RPN.

Das öffentliche Telekommunikationsnetz PSTN kann beispielsweise ein ISDN-Telekommunikationsnetz (Integrated Services Digital Network), ein Mobilfunk-Telekommunikationsnetz, z.B. ein GSM-Netz (GSM = Global System for Mobile Communication), oder ein Datennetzwerk sowie eine beliebige Kombination derartiger Netze sein. Das Telekommunikationsnetz PSTN ist vorliegend als sogenanntes Intelligentes Netz ausgestaltet. Exemplarisch für nicht dargestellte Vermittlungsstellen, Netzwerk-Management-Systeme, Verbindungsleitungen etc. sind von dem Telekommunikationsnetz PSTN lediglich Vermittlungsstellen SW1, SW2, ein Dienst-Steuerknoten SCP sowie ein Gebührenserver ACC2 gezeigt. Die Vermittlungsstellen SW1, SW2 sind vorliegend sogenannte Dienst-Vermittlungsstellen oder Service Switching Points (SSP) und der Dienst-Steuerknoten SCP ist ein sogenannter Service Control Point (SCP) eines Intelligenten Netzes. Die grundsätzlichen Funktionen eines Service Switching Points und eines Service Control Points sind durch die ITU (International Telecommunication Union) standardisiert und müssen deshalb an dieser Stelle nicht weiter ausgeführt werden.

Die Vermittlungsstellen SW1, SW2 sind Ausführungsbeispiele für erfindungsgemäße Netzknoten, der Dienst-Steuerknoten SCP und der Gebührenserver ACC2 Ausführungsbeispiele erfindungsgemäßer Gebühreneinrichtungen. Der Gebührenserver ACC2 bucht vorliegend für das virtuelle private Netz VPN2 Verbindungskosten von Verbindungen, die aus dem VPN2 heraus in das öffentliche Telekommunikationsnetz PSTN hineinführen. Prinzipiell könnte der Gebührenserver ACC2 auch Verbindungskosten von innerhalb des virtuellen privaten Netzes VPN2 aufgebauten Verbindungen erfassen. Der die Funktionen einer erfindungsgemäßen Gebühreneinrichtung erfüllende Dienst-Steuerknoten SCP bucht in ähnlicher Weise wie der Gebührenserver ACC2 Verbindungskosten von aus dem virtuellen privaten Netz VPN1 heraus in das öffentliche Telekommunikationsnetz PSTN hineinführenden Verbindungen.

Die Vermittlungsstellen SW1, SW2 kommunizieren über Verbindungen VSW, VNX miteinander sowie je über eine Verbindung VSC1, VSC2 mit dem Dienst-Steuerknoten SCP bzw. über je eine Verbindung VAC1, VAC2 mit dem Gebührenserver ACC2. Die Verbindungen VSW, VNX, VSC1, VSC2, VAC1; VAC2 führen über nicht dargestellte Einrichtungen des Telekommunikationsnetzes PSTN. Die Verbindung VSW steht beispielhaft für eine oder mehrere Verbindungen mit Kanälen für Nutzdaten sowie Kanälen für Signalisierungsdaten und wird vom Betreiber des Telekommunikationsnetzes PSTN betrieben. Die Verbindung VNX hingegen ist ein zu der Verbindung VSW alternativer Übertragungsweg und wird von einem nicht dargestellten weiteren Betreiber betrieben. Bei den Verbindungen VSC1, VSC2, VAC1; VAC2 handelt es sich um Verbindungen, die vorzugsweise über ein LAN (Local Area Network) und/oder über einen Signalisierungskanal und/oder über ein Signalisierungsnetzwerk geführt werden. Ein solches Signalisierungsnetzwerk ist z.B. das zentrale Zeichengabesystem Nr. 7. Auf den Verbindungen VSC1, VSC2, VAC1; VAC2 wird bevorzugt mit dem INAP-Protokoll (INAP = Intelligent Network Application Part) kommuniziert.

Beispielhaft für beliebige weitere, an das Telekommunikationsnetz PSTN angeschlossene Endgeräte ist ein über eine Teilnehmeranschlussleitung VX an die Vermittlungsstelle SW1 angeschlossenes Endgerät TX eines nicht dargestellten Teilnehmers SX gezeigt, das z.B. ein leitungsgebundenes Telefon ist.

Die privaten Telekommunikationsnetze VPN1, VPN2 sind virtuelle private Telekommunikationsnetze (VPN), die mit Hilfe des öffentlichen Telekommunikationsnetzes PSTN aufgebaut sind, während das private Telekommunikationsnetz RPN ein reales, durch private Vermittlungsstellen PB21, PB22 und daran angeschlossene Endgeräte T211, T212, T213 bzw. T221, T222 gebildetes privates Telekommunikationsnetz ist. Die Endgeräte T211, T212, T213 bzw. T221, T222 sind beispielsweise leitungsgebundene Telefonapparate, DECT-Endgeräte (DECT = Digital Enhanced Cordless Telecommunications) oder Personal Computer und nicht dargestellten Teilnehmern S211, S212, S213, S221, S222 zugeordnet. Die Vermittlungsstellen PB21, PB22 sind über ein Leitungsbündel VPB, eine sogenannte Querleitung (engl. tie line) oder eine sonstige Verbindungsleitung, miteinander verbunden, die einen oder mehrere Signalisierungs- und Nutzdatenkanäle enthält.

Das Telekommunikationsnetz RPN kann auch als lokales Nebenstellentelekommunikationsnetz oder kurz als Nebenstellennetz bezeichnet werden und ist z.B. innerhalb eines Gebäudekomplexes eines Unternehmens oder einer sonstigen Organisation installiert. Die Vermittlungsstellen PB21, PB22 sind sogenannte Nebenstellenvermittlungsanlagen oder Nebenstellenanlagen (engl. PBX = Private Branch Exchange oder PABX = Private Automatic Branch Exchange). Das Telekommunikationsnetz RPN ist über eine Verbindungsleitung VB1, die von der Vermittlungsstelle SW1 zu der Vermittlungsstelle PB22 führt, an das öffentliche Telekommunikationsnetz PSTN angeschlossen. Die Verbindungsleitung VB1 ist beispielsweise eine ISDN-Teilnehmeranschlussleitung mit mehreren Nutzdatenkanälen und einem oder mehreren Signalisierungskanälen.

Das Telekommunikationsnetz RPN enthält einen als erfindungsgemäße Gebühreneinrichtung ausgestalteten Gebührenserver ACC1 zur Vergebührung von individuellen Verbindungskosten der angeschlossenen Endgeräte T211, T212, T213; T221, T222 nicht dargestellter Teilnehmer S211, S212, S213, S221, S222. Der Gebührenserver ACC1 bucht vorliegend Verbindungskosten von Verbindungen, die über das öffentliche Telekommunikationsnetz PSTN aufgebaut werden und aus dem Telekommunikationsnetz RPN herausführen, beispielsweise Verbindungen zu dem Endgerät TX. Die Vermittlungsstelle PB22 baut diese Verbindungen aus dem Telekommunikationsnetz RPN in das öffentliche Telekommunikationsnetz PSTN auf. Prinzipiell könnte der Gebührenserver ACC1 auch Verbindungskosten von innerhalb des privaten Telekommunikationsnetzes RPN aufgebauten Verbindungen erfassen.

Das virtuelle private Telekommunikationsnetz VPN1 ist auf dem öffentlichen Telekommunikationsnetz PSTN aufgebaut und enthält an die Vermittlungsstelle SW2 angeschlossene Endgeräte T12, T13 sowie eine an die Vermittlungsstelle SW1 angeschlossene private Vermittlungsstelle PB11 und mit dieser verbundene Endgeräte T111, T112, T113. Bei den Endgeräten T12, T13; T111, T112, T113, die nicht dargestellten Teilnehmern S12, S13; S111, S112, S113 zugeordnet sind, handelt es sich beispielsweise um leitungsgebundene Telefonapparate, DECT-Endgeräte oder Personal Computer. Die Vermittlungsstelle PB11 kann als eine leitungsgebundene Vermittlungsstelle gestaltet sein und/oder als eine Funk-Basisstation, z.B. eine DECT-Basisstation. Die Vermittlungsstelle PB11 kann beispielsweise in einem Firmengebäude installiert sein, wohingegen die Endgeräte T12, T13 Außendienstmitarbeiten oder Heimarbeitern gehören, die sich von außerhalb in das virtuelle private Netz VPN1 einwählen.

Ein wichtiger Dienst des virtuellen privaten Netzes VPN1 ist vorliegend die Bereitstellung eines sogenannten Rufnummernplanes, bei dem den an das Netz angeschlossenen Teilnehmern jeweils eine VPN-interne Rufnummer zugeordnet ist, die unabhängig von einer im öffentlichen Telekommunikationsnetz PSTN jeweils für den Teilnehmer geltenden Rufnummer sein kann. Beispielsweise können die Endgeräte T12, T13; T111, T112, T113 untereinander unter VPN-internen, logischen Rufnummern 1912, 113; 1111, 1112, 1113 erreichbar sein, während von außerhalb, beispielsweise von dem Endgerät TX, jeweils öffentliche Rufnummern 04711-12, 04711-13; 04711-111, 04711-1912 bzw. 04711-113 zu wählen sind. Die notwendige Umsetzung einer VPN-internen Rufnummer in öffentliche Rufnummern und umgekehrt übernehmen die als Service Switching Points ausgestalteten Vermittlungsstellen SW1, SW2 und der als Service Control Point ausgestaltete Dienst-Steuerknoten SCP interaktiv in an sich bekannter Weise.

Vorliegend sind die Endgeräte T12, T13 zwar mit der Vermittlungsstelle SW2 verbunden. Die Teilnehmer S12, S13 könnten sich jedoch beispielsweise auch einerseits an der Vermittlungsstelle PB1 oder andererseits an der Vermittlungsstelle SW1 oder einer sonstigen, nicht dargestellten Vermittlungsstelle des öffentlichen Telekommunikationsnetzes PSTN anmelden. Die jeweilige Zuordnung von physikalischer Adresse, z.B. Rufnummer einer Teilnehmeranschlussleitung, zu logischer, VPN-interner Rufnummer wird dann in dem Dienst-Steuerknoten SCP und/oder in der Vermittlungsstelle PB1 vermerkt. Einwahlprozeduren in ein VPN, gegebenenfalls unter Angabe von einem Passwort, sind an sich bekannt und werden daher nicht weiter erläutert.

Das virtuelle private Netz VPN2 enthält die Einrichtungen des Telekommunikationsnetzes RPN sowie die Komponenten des virtuellen privaten Netzes VPN1, also die Vermittlungsstelle PB1 und die Endgeräte T12, T13; T111, T112, T113, und ist auf dem öffentlichen Telekommunikationsnetz PSTN aufgebaut. Auch für das virtuelle private Netz VPN2 gilt ein privater Rufnummernplan, bei dem den Endgeräten T12, T13; T111, T112, T113 die internen Rufnummern 212, 213; 2111, 2112, 2113 und den Endgeräten T211, T212, T213, T221, T222 T211 die internen Rufnummern 2212, 2213, 2221, 2222 zugeordnet sind. Von außen her, also z.B. von dem Teilnehmer-Endgerät TX des Telekommunikationsnetzes PSTN, ist den genannten VPN-internen Rufnummern eine Vorwähl voranzustellen, z.B. eine Ziffernfolge "048".

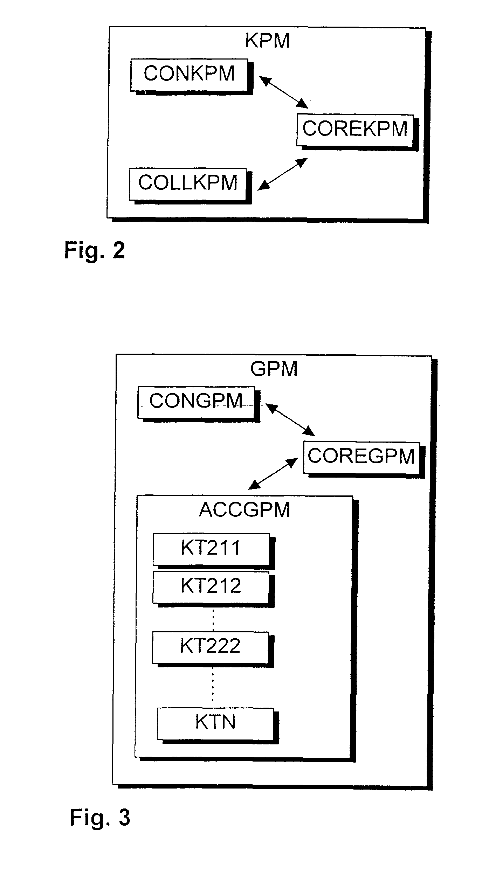

Von der Vermittlungsstelle SW2 sind beispielhaft einige wesentliche Komponenten gezeigt, nämlich ein Verbindungsmittel TRSW sowie ein Steuermittel CPUSW und ein Speichermittel MEMSW. Mit dem Verbindungsmittel TRSW kann die Vermittlungsstelle SW2 einerseits Daten- und Sprachverbindungen zu Teilnehmern oder anderen Vermittlungsstellen, z.B. die Verbindungen VB1 und VSW, aufbauen. Andererseits kann das Verbindungsmittel TRSW auch Signalisierungsverbindungen, wie z.B. die Verbindung VSC2 zu dem Dienst-Steuerknoten SCP aufbauen. Bei dem Steuermittel CPUSW handelt es sich um einen Prozessor oder um eine Gruppe von Prozessoren, die Programmcode von Programm-Modulen, beispielsweise von dem in Figur 2 schematisch gezeigten Knotenpunkt-Programm-Modul KPM, ausführen, die in dem Speichermittel MEMSW gespeichert sind. Das Steuermittel CPUSW steuert mit Hilfe der Programm-Module unter Kontrolle eines Betriebssystems die Funktionen der Vermittlungsstelle SW2 und nimmt dabei beispielsweise auf die Funktionen der als Sende- und Empfangsmittel dienenden Verbindungsmittel TRSW Einfluss. Das Verbindungsmittel TRSW, das Steuermittel CPUSW und das Speichermittel MEMSW sind durch in Figur 1 nicht dargestellte Verbindungen untereinander verbunden. Weiterhin kann die Vermittlungsstelle SW2 weitere Baugruppen aufweisen, z.B. ein Koppelnetzwerk oder eine Schnittstelle zu einem Network Management System.

Die Vermittlungsstelle SW1 ist vorliegend gleichartig aufgebaut wie die Vermittlungsstelle SW2 und leistet wie diese die später noch beschriebenen erfindungsgemäßen Funktionen. Die Vermittlungsstelle SW1 könnte jedoch auch eine konventionelle, bekannte Vermittlungsstelle sein.

Die private Vermittlungsstelle PB22 ist im Wesentlichen gleichartig aufgebaut wie die Vermittlungsstelle SW2. Daher sollen deren Komponenten nicht im Einzelnen erläutert werden. Ein Steuermittel CPUP entspricht dabei dem Steuermittel CPUSW, Speichermittel MEMPB den Speichermitteln MEMSW und als Sende- und Empfangsmittel dienende Verbindungsmittel TRPB den Verbindungsmitteln TRSW. Das Steuermittel CPUPB steuert mit Hilfe von Programm-Modulen, beispielsweise von den in den Figur 2 bzw. 3 schematisch dargestellten Modulen Knotenpunkt-Programm-Modul KPM und Gebühren-Programm-Modul GPM, unter Kontrolle eines Betriebssystems die Funktionen der Vermittlungsstelle PB22 und nimmt dabei beispielsweise auf die Funktionen der Verbindungsmittel TRPB Einfluss.

Der Dienst-Steuerknoten SCP weist nicht dargestellte Verbindungsmittel zum Aufbau von Daten- und/oder Signalisierungsverbindungen sowie Steuermittel, z.B. Prozessoren, und Speichermittel, z.B. als Arbeitsspeicher dienende RAM-Bausteine und Festplattenlaufwerke, auf und wird durch Programm-Module unter Kontrolle eines Betriebssystems gesteuert. Vorliegend führen die Steuermittel des Dienst-Steuerknotens SCP das in Figur 3 schematisch gezeigte Gebühren-Programm-Modul GPM aus, das in den Speichermitteln des Dienst-Steuerknotens SCP gespeichert ist.

Die Gebührenserver ACC1, ACC2 sind erfindungsgemäße Gebühreneinrichtungen und vorliegend gleichartig aufgebaut. Die Gebührenserver ACC1, ACC2 verfügen über Verbindungsmittel TRAC zur Verbindung mit den Vermittlungsstellen PB22; SW1, SW2 und weisen Steuermittel CPUAC und Speichermittel MEMAC auf. Bei den Gebührenservern ACC1, ACC2 kann es sich um Rechner handeln, die z.B. durch ein UNIX-Betriebssystem oder ein Windows-NT-Betriebssystem betrieben werden. Das Steuermittel CPUAC ist ein Prozessor oder ein Cluster von Prozessoren, das die Befehle des Betriebssystems, das in dem Speicher MEMAC gespeichert ist, ausführt. Weiterhin können in dem Speichermittel MEMAC, das beispielsweise eine Festplatte oder RAM-Bausteine umfasst, Programmcode-Sequenzen von Programm-Modulen gespeichert sein, die von dem Steuermittel CPUAC ausgeführt werden. Ein solches Programm-Modul ist beispielsweise das in Figur 3 gezeigte Gebühren-Programm-Modul GPM. Die Steuermittel CPUAC beeinflussen auch die Funktionen der Verbindungsmittel TRAC, mit dem z.B. die Verbindungen VAC1, VAC2 aufgebaut werden können. Die Verbindungsmittel TRAC sind beispielsweise Netzwerkkarteneinschübe, Modems und dergleichen, die gegebenenfalls zugehörige, sie steuernde und von ihnen selbst und/oder von den Steuermitteln CPUAC ausgeführte Programme umfassen. Die erfindungsgemäßen Funktionen der Gebührenserver ACC1, ACC2 werden vorliegend und vorzugsweise durch Ausführung der Gebühren-Programm-Module GPM im Zusammenwirken mit der beschriebenen Hardware erbracht. Die Gebührenserver ACC1, ACC2 weisen auch weitere, in Figur 1 nicht dargestellte Baugruppen auf, z.B. Monitore, Tastaturen und Computermäuse. Die Gebührenserver ACC1, ACC2 können neben den Vermittlungsstellen PB22; SW1, SW2 auch weitere, nicht dargestellte öffentliche und/oder private Vermittlungsstellen bedienen.

Das Knotenpunkt-Programm-Modul KPM und das Netzwerkeinrichtungs-Programm-Modul NPM sind z.B. in einer Programmiersprache, beispielsweise "C", "C++", Java oder dergleichen, erstellt und werden anschließend durch einen Kompiler oder einen Interpreter in Programmcode übersetzt, der durch die Steuermittel CPUSW, CPUPB, CPUAC ausgeführt werden kann. Die Module KPM, GPM sind lediglich schematisch aus funktionaler Sicht dargestellt und können jeweils auch individuell anders ausgebaut sein. Die Module KPM, GPM weisen jeweils einen zentralen Steuerteil auf, der mit COREKPM, COREGPM bezeichnet ist und der im Folgenden näher beschriebene Funktionen bzw. Teilprogramme aufruft.

Die zentralen Steuerteile COREKPM, COREGPM steuern die jeweils als Verbindungsmittel dienende Verbindungsfunktionen CONKPM bzw. CONGPM. Zudem weisen das Ziel-Programm-Modul ZPM eine als Gebührenerfassungsmittel dienende Gebührenerfassungsfunktion COLLKPM und das Gebühren-Programm-Modul GPM eine als Kontoführungsmittel dienende Kontoführungsfunktion ACCGPM auf.

Am Beispiel des in der Vermittlungsstelle PB22 installierten Knotenpunkt-Programm-Moduls KPM und des in dem Gebührenserver ACC1 installierten Gebühren-Programm-Moduls GPM sollen die jeweiligen vorgenannten Funktionen erläutert werden. Das Endgerät T222 tritt dabei als Teilnehmer des privaten Telekommunikationsnetzes RPN auf.

Die Verbindungsfunktion CONKPM dient zum Empfangen eines Verbindungswunsches eines Endgeräts zum Aufbau einer Verbindung, beispielsweise zum Empfangen eines Verbindungswunsches, der von dem Endgerät T222 an die Vermittlungsstelle PB22 zum Aufbau einer Verbindung zu dem Endgerät TX gesandt wird. Die Verbindungsfunktion CONKPM dient ferner zum Empfangen einer Abbuchungskennung, mit der angegeben wird, dass die für die Verbindung anfallenden Verbindungskosten einem privaten Konto des Teilnehmers zugerechnet werden sollen. Beispielsweise werden von dem Teilnehmer S222 angeforderte geschäftliche Verbindungen nicht dessen privatem Konto belastet.

Im vorliegenden Beispiel gibt der Teilnehmer S222 eine Abbuchungskennung beispielsweise in Form einer Vorwahl einen Zahlencode an, den das Endgerät T222 an die Vermittlungsstelle PB22 sendet und mit dem angegeben wird, dass die für die Verbindung anfallenden Verbindungskosten einem privaten Konto KT222 des Teilnehmers S222 zugerechnet werden sollen. Dieses Konto KT222 des wird vorliegend durch die Kontoführungsfunktion ACCGPM des in dem Gebührenserver ACC1 installierte Gebühren-Programm-Modul GPM verwaltet.

Die Verbindungsfunktion CONKPM kann ferner eine gewünschte Verbindung aufbauen, beispielsweise ein nicht dargestelltes Koppelnetz der Vermittlungsstelle PB22 zum Schalten einer Verbindung zwischen dem Endgerät T222 und der Teilnehmeranschlussleitung VB1 anweisen sowie eine Ruf-Signalisierungsnachricht an die Vermittlungsstelle SW2 zum Aufbau der Verbindung zu dem Endgerät TX senden. Die Gebührenerfassungsfunktion COLLKPM erfasst die für die gewünschte Verbindung anfallenden Verbindungskosten und rechnet diese dem privaten Konto KT222 des Teilnehmers S222 zu. Dazu sendet die Gebührenerfassungsfunktion COLLKPM z.B. Gebührenimpulse oder als Gebührentickets bezeichnete Gebührennachrichten an die Kontoführungsfunktion ACCGPM des Gebühren-Programm-Moduls GPM. Dieses wird im vorliegenden Beispiel durch den Gebührenserver ACC1 ausgeführt. Das Gebühren-Programm-Modul GPM könnte jedoch auch in einer Variante der Erfindung durch die Vermittlungsstelle PB22 ausgeführt werden und ist deshalb in deren Speicher MEMPB gestrichelt angedeutet.

Die Gebührenerfassungsfunktion COLLKPM und die Verbindungsfunktion CONKPM wirken derart zusammen, dass die von dem Teilnehmer S222 gewünschte Verbindung nur dann aufgebaut wird und/oder nur solange gehalten wird, wenn bzw. wie auf dem privaten Konto KT222 ein Guthaben vorhanden ist.

Daher senden die Verbindungsfunktion CONKPM oder die Gebührenerfassungsfunktion COLLKPM bereits vor Aufbau der Verbindung zwischen den Endgeräten T222, TX eine Anfrage an die Kontoführungsfunktion ACCGPM, ob auf dem privaten Konto KT222 ein Guthaben vorhanden ist. Nur wenn dies der Fall ist, wird die Verbindung zwischen den Endgeräten T222, TX aufgebaut. Ferner könnten die Gebührenerfassungsfunktion COLLKPM und/oder die Verbindungsfunktion CONKPM eine Anfrage an das Telekommunikationsnetz PSTN senden, welcher Gebührentarif für die gewünschte Verbindung fällig ist und bei einem gegebenenfalls zu geringen Guthaben auf dem privaten Konto KT222 den Aufbau den Aufbau der Verbindung zwischen den Endgeräten T222, TX ablehnen. Weiterhin könnte das Knotenpunkt-Programm-Modul KPM und/oder die jeweils dieses ausführende Vorrichtung, beispielsweise die Vermittlungsstellen PB, SW2,eine Gebührentabelle aufweisen, in der eingetragen ist, welcher Gebührentarif für die gewünschte Verbindung anzuwenden ist.

Auch nach gegebenenfalls erfolgtem Aufbau der Verbindung zwischen den Endgeräten T222, TX überprüft die Gebührenerfassungsfunktion COLLKPM, ob auf dem privaten Konto KT222 ein Guthaben vorhanden ist. Dazu fragt die Gebührenerfassungsfunktion COLLKPM beispielsweise zyklisch das Gebühren-Programm-Modul GPM nach dem jeweiligen Guthaben. Ferner könnte die Kontoführungsfunktion ACCGPM von dem Knotenpunkt-Programm-Modul KPM gesendete Gebührentickets mit über das jeweilige Restguthaben informierenden Nachrichten quittieren oder bei aufgezehrtem Guthaben eine entsprechende Nachricht über das fehlende Guthaben an das Knotenpunkt-Programm-Modul KPM senden.

Die ständige Überprüfung des Guthabens kann auch unterbleiben, beispielsweise wenn lediglich für den Aufbau einer Verbindung Verbindungskosten anfallen und nur diese von dem jeweiligen Konto abbuchbar sein müssen.

Die Verbindungsfunktion CONGPM des Gebühren-Programm-Moduls GPM ist zur Kommunikation mit dem Knotenpunkt-Programm-Modul KPM ausgestaltet und steuert dazu in dem Gebührenserver ACC1 die Verbindungsmittel TRAC entsprechend an. Die Verbindungsfunktion CONGPM empfängt dabei z.B. die obengenannten Gebührentickets und sendet Quittungstelegramme hierfür sowie Antwortnachrichten auf Abfragen zu einem Guthaben auf einem Konto.

Die Kontoführungsfunktion ACCGPM ist für die Führung von privaten Teilnehmer-Konten zuständig. Einige dieser Konten sind beispielhaft für das in dem Gebührenserver ACC1 bzw. in der Vermittlungsstelle PB22 installierte Gebühren-Programm-Modul GPM gezeigt: für die Teilnehmer S211, S212, S222 sind Konten KT211, KT212, KT222 eingerichtet. Ein Konto KTN steht als Beispiel für n weitere, nicht dargestellte Teilnehmer-Konten. Anzahl und Bezeichnung der jeweiligen Konten lassen sich durch Konfigurationsdaten bei dem Gebühren-Programm-Modul GPM einstellen. Dementsprechend weist das in dem Gebührenserver ACC installierte und zur Vergebührung des virtuellen privaten Netzes VPN2 zuständige Gebühren-Programm-Modul GPM dieselben Konten wie das in dem Gebührenserver ACC1 installierte Gebühren-Programm-Modul GPM und zudem noch Konten für die Teilnehmer T12, T13; T111, T112, T113, wohingegen das in dem Dienst-Steuerknoten SCP installierte Gebühren-Programm-Modul GPM nur Konten der letztgenannten Teilnehmer verwaltet.

Die jeweiligen Konten der Gebühren-Programm-Module GPM können individuell mit einem Guthaben versehen werden. Dazu wird beispielsweise per Electronic-Cash, per Überweisung, per Scheck-Karte, per Kreditkarte oder per sonstiger Zahlungsform ein Betrag auf das jeweilige Konto angewiesen und von der Kontoführungsfunktion ACCGPM verbucht. Derartige Buchungsverfahren, die gegebenenfalls durch Passwörter, einmalig verwendbare Transaktionskennungen und dergleichen geschützt sind, sind an sich bekannt und brauchen nicht weiter erläutert werden. Ferner können mehrere einem Teilnehmer gehörende Konten jeweils individuell mit Guthaben versehen werden. Beispielsweise kann der Teilnehmer T221 sein von dem in Bezug auf das Telekommunikationsnetz RPN von dem Gebührenserver ACC1 verwaltetes Konto KT221 einen ersten Betrag buchen und auf sein in Bezug auf das virtuelle private Netz VPN2 von dem Gebührenserver ACC2 verwaltetes Konto einen zweiten Betrag. Weiter können für einen Teilnehmer in dem Gebühren-Programm-Modul GPM oder einer sonstigen erfindungsgemäßen Gebühreneinrichtung mehrere private Konten angelegt sein.

Weiterhin beantwortet die Kontoführungsfunktion ACCGPM Anfragen, die vorzugsweise von einem Knotenpunkt-Programm-Modul KPM oder einem erfindungsgemäßen Netzknoten gesendet werden und in denen das jeweilige Guthaben eines Kontos vor dem Aufbau einer kostenpflichtigen Verbindung abgefragt wird, so dass diese nur dann aufgebaut wird, wenn auf dem privaten Konto ein Guthaben vorhanden ist. Es ist auch möglich, dass von einem Endgerät, beispielsweise von dem im obigen Beispiel aktiven Endgerät T222, eine Abfrage zum Guthaben eines privaten Kontos, z.B. des Kontos KT222, an das in dem Gebührenserver ACC1 installierte Gebühren-Programm-Modul GPM gesendet und von diesem beantwortet wird. Es versteht sich, dass sich der jeweils Abfragende durch Passwörter, Zugangscodes, Bild- und/oder Spracherkennung bei einer solchen Abfrage zweckmäßigerweise identifizieren und/oder authentifizieren muss.

Die Kontoführungsfunktion ACCGPM sind sowohl zur Aufbuchung eines Guthabens als auch zur Abbuchung von Verbindungskosten ausgestaltet, die für eine von einem Endgerät, z.B. dem Endgerät T222, zusammen mit einer Abbuchungskennung für das private Konto, z.B. das Konto KT222, gewünschte und von dem privaten Telekommunikationsnetz PSTN aufgebaute Verbindung anfallen, nämlich vorliegend die Verbindung zwischen den Endgeräten T222 und TX. Wie erwähnt sendet dazu das Knotenpunkt-Programm-Modul KPM entsprechende Gebührentickets an das Gebühren-Programm-Modul GPM, welches die darin angegebenen Beträge von dem Konto KT222 abbucht. Die Kontoführungsfunktion ACCGPM wirkt mit der als erfindungsgemäßer Netzknoten ausgestalteten Vermittlungsstelle PB22 derart zusammen, dass eine von einem Teilnehmer, vorliegend von dem Teilnehmer S222, gewünschte Verbindung nur solange gehalten wird, wie auf dem privaten Konto KT222 ein Guthaben vorhanden ist. Spätestens wenn dieses aufgebraucht ist, sendet die Kontoführungsfunktion ACCGPM eine entsprechende Nachricht an die Vermittlungsstelle PB22. Vorliegend jedoch quittiert das Gebühren-Programm-Modul GPM die von der Vermittlungsstelle PB22 gemeldeten Gebührentickets mit Nachrichten über den jeweils noch aktuellen Guthabenstand auf dem KT222, so dass das Knotenpunkt-Programm-Modul KPM stets über das aktuelle Guthaben informiert ist.

Das Gebühren-Programm-Modul GPM des Gebührenservers ACC1 sendet zweckmäßigerweise auch an das Endgerät T222 Nachrichten über den jeweiligen Stand des privaten Kontos KT222, so das Endgerät T222 den Stand visuell, z.B. an einem Display und/oder akustisch, z.B. über eine Ausgabe an einem Handapparat oder einem Lautsprecher, dem Teilnehmer S222 anzeigen kann.

Die Vermittlungsstelle PB22 sowie der Gebührenserver ACC 1 dienen neben dem Endgerät T222 auch für die weiteren Endgeräte T221, T211, T212, T213 des Telekommunikationsnetzes RPN als erfindungsgemäße Netzknoten bzw. Gebühreneinrichtung.

Die jeweiligen Funktionen CONKPM, COLLKPM; CONKPM, ACCGPM der Module KPM, GPM können lediglich zur Kommunikation mit den ihnen jeweils zugeordneten zentralen Steuerteilen COREKPM, COREGPM ausgestaltet sein, als auch jeweils zu einer unmittelbaren Kommunikation und/oder zu einem unmittelbaren gegenseitigen Funktionsaufruf untereinander, wobei die zentralen Steuerteile COREKPM, COREGPM gegebenenfalls nicht unbedingt erforderlich sind.

Das Gebühren-Programm-Modul GPM und das Knotenpunkt-Programm-Modul KPM können in einem gemeinsamen Programm-Modul realisiert sein, das die Funktionen beider Module leistet.

Bei der Ausführung des erfindungsgemäßen Verfahrens sind diverse Varianten möglich, von denen im Folgenden einige weitere erläutert werden: Beispielsweise sendet das Endgerät T211 einen Verbindungswunsch für eine Verbindung zu dem Endgerät TX an die Vermittlungsstelle PB21. Diese leitet den Verbindungswunsch an die Vermittlungsstelle PB22 weiter. Anhand einer in dem Verbindungswunsch angegebenen (in Figur 1 nicht dargestellten) Rufnummer RNX des Endgeräts TX erkennt die Vermittlungsstelle PB22, dass es sich bei der angeforderten Verbindung um eine private Verbindung handelt. Die Rufnummer RNX ist in eine Liste von Restriktionskriterien eingetragen, mit der Verbindungswünsche von Teilnehmern S211, S212, S213, S221, S222 des Telekommunikationsnetzes RPN zu vorbestimmten Zielen, beispielsweise zu internationalen Zielen oder zu bestimmten Service-Nummern, zurückgewiesen werden. Daher sendet die Vermittlungsstelle PB22 eine Nachricht an das Endgerät T211, dass die geforderte Verbindung lediglich dann aufgebaut wird, wenn der Teilnehmer S211 die dabei anfallenden Verbindungskosten seinem privaten Konto KT211 belasten will. Der Teilnehmer S211 gibt im vorliegenden Beispiel die geforderte Abbuchungskennung beispielsweise als DTMF-Code an dem Endgerät T211 an. Ferner gibt der Teilnehmer ein Passwort an, das das Gebühren-Programm-Modul GPM im Zusammenhang mit der Abbuchungskennung überprüft.

Nach Erhalt der Abbuchungskennung und bei ausreichendem Guthaben auf dem Konto KT211 wendet die Vermittlungsstelle PB22 die Restriktionskriterien nicht mehr an, d.h. die Verbindung zu dem Endgerät TX wird aufgebaut.

Es ist auch möglich, dass die Restriktionskriterien auch bei einer Belastung eines privaten Kontos weiterhin in eingeschränktem Umfang angewendet werden. Beispielsweise kann es von Seiten eines Arbeitgebers unerwünscht sein, dass bestimmte Service-Rufnummern während der Arbeitszeit nicht erreichbar sein sollen.

Ferner können die Restriktionskriterien den Aufbau einer Verbindung über einen vorbestimmten Übertragungsweg verbieten. Beispielsweise ist vorliegend für das Telekommunikationsnetz RPN bestimmt, dass üblicherweise von diesem in das Telekommunikationsnetz PSTN aufgebaute Verbindungen, z.B. geschäftliche Verbindungen, nur über Übertragungswege des Telekommunikationsnetzes PSTN geführt werden. Soll z.B. das Endgerät TX von dem Telekommunikationsnetz RPN aus erreicht werden, wird dafür die Verbindung VSW gewählt. Möglicherweise sind die dabei anfallenden Verbindungskosten aufgrund eines für das private Telekommunikationsnetz RPN individuell geltenden Gebührentarifes geringer als bei einer Verbindung auf dem alternativen Übertragungsweg VNX, wobei in den obigen Beispielen die Teilnehmer T222 bzw. T211 bei ihren jeweiligen privaten Verbindungen zu dem Endgerät TX von den geringen, für das Telekommunikationsnetz RPN vereinbarten Verbindungskosten profitieren.

Es ist jedoch auch möglich, dass die Verbindungskosten auf dem von dem Telekommunikationsnetz RPN sozusagen zwangsweise zu benutzenden Übertragungsweg VSW höher sind, als auf dem durch einen anderen Betreiber betriebenen Übertragungsweg VNX. Für private Verbindung muss dieser Zwang, der beispielsweise durch einen Vertrag der Betreiber der Telekommunikationsnetze RPN und PSTN festgelegt ist, nicht gelten. Wenn z.B. von dem Endgerät T222 aus eine Verbindung zum Endgerät TX aufgebaut werden soll, bei der die anfallenden Verbindungskosten dem Konto KT222 zugerechnet werden sollen, kann z.B. durch Vorwahl eines Zugangscodes von dem Endgerät T222 aus bestimmt werden, dass die gewünschte Verbindung auf dem Übertragungsweg VNX aufgebaut werden soll, wobei das Telekommunikationsnetz RPN die Restriktionskriterien aufgrund der Belastung des privaten Kontos die Restriktionskriterien nicht anwendet.

Es ist auch möglich, dass für das Endgerät T222, z.B. durch ein in der Vermittlungsstelle PB22 abgelegtes Teilnehmerprofil, vorbestimmt ist, dass bei dem privaten Konto KT222 zu belastenden Verbindungen stets der Übertragungsweg VNX zu wählen ist. Ferner können für das Endgerät T222 nicht nur ein Übertragungsweg, sondern mehrere, jeweils zeitabhängig zu wählende Übertragungswege definiert sein, die z.B. in einer sogenannten Least-Cost-Routing-Tabelle eingetragen sind.

Im nachfolgenden Beispiel wird ein Verbindungsaufbau von dem Endgerät T12 aus erläutert, wobei das Endgerät in dem Beispiel als Endgerät des virtuellen privaten Netzes VPN1 auftritt.

Das Endgerät T12 ist nicht ständig mit dem virtuellen privaten Netz VPN1 verbunden, sondern wird von Fall zu Fall bei diesem angemeldet. Beispielsweise wird das Endgerät T12, nachdem es zuvor sozusagen "off-net" ist, mit einer nicht dargestellten teilnehmerseitigen Anschlussdose der Teilnehmeranschlussleitung VB2 verbunden. Dann sendet das Endgerät T12 im Rahmen einer an sich bekannten Anmeldeprozedur eine Zugangskennung zur Anmeldung an das virtuelle private Netz VPN1 an die Vermittlungsstelle SW2. Bei der Zugangskennung kann es sich beispielsweise um eine Rufnummer handeln, die eine VPN-Dienstekennziffer - eine das individuelle VPN1 identifizierende VPN-Gruppennnummer sowie die Rufnummer des Endgeräts T12 innerhalb des Rufnummernplans des privaten Netzes "1912" enthält. Diese erkennt aufgrund ihrer Eigenschaft als SSP die entsprechenden VPN-Anmeldnachrichten und holt sich bei dem Dienst-Steuerknoten SCP die notwendigen Anweisungen zu deren Bearbeitung. Ferner wird in dem Dienst-Steuerknoten SCP abgelegt, dass das Endgerät T12 nunmehr an der Teilnehmeranschlussleitung VB2 angeschlossen ist und über die Vermittlungsstelle SW2 unter der VPN-internen Rufnummer "1912" erreicht werden kann. Prinzipiell kann sich das Endgerät T12 für jeweils einen Verbindungswunsch beim Netz VPN1 anmelden ("call-by-call") oder längerfristig für mehrere ankommende und/oder abgehende Verbindungen. Ferner ist es möglich, dass die Teilnehmeranschlussleitung VB2 von dem Telekommunikationsnetz PSTN prinzipiell als eine dem privaten Netz VPN1 zugeordnete Teilnehmeranschlussleitung behandelt wird. Das Endgerät T12 müsste sich dann nicht als Teilnehmer des privaten Netzes VPN1 anmelden, sondern für eine Verbindung aus dem Netz VPN1 heraus, z.B. zu dem Endgerät TX, durch Angabe einer sogenannten Escape-Kennung, z.B. durch Vorwahl einer "0" bei einem Verbindungswunsch, bei dem privaten Netz VPN1 sozusagen abmelden.

Wenn der Teilnehmer S12 innerhalb des virtuellen privaten Netzes VPN1 Verbindungen bei der Vermittlungsstelle SW2 anfordert, z.B. zu dem Endgerät T113, gibt er lediglich dessen VPN-interne Rufnummer 1113 an. In Interaktion mit dem Dienst-Steuerknoten SCP, bei der beispielsweise die dem Endgerät T113 zugeordnete, im Telekommunikationsnetz PSTN sozusagen "phsyikalisch" geltende Rufnummer ermittelt wird, stellt die Vermittlungsstelle SW2 die gewünschte Verbindung VB2, VSW, VA, P11 dann her.

In dem Dienst-Steuerknoten SCP ist neben einer Zuordnungseintragung VPN-Rufnummer zu PSTN-Rufnummer auch ein Teilnehmerprofil für den Teilnehmer S12 abgelegt, das ein persönliches Kurzwahlverzeichnis, ein persönliches Telefonbuch sowie eine Least-Cost-Routing-Tabelle enthält. Das Teilnehmerprofil kann beispielsweise durch ein nicht dargestelltes Netzwerk-Management-System konfiguriert werden und/oder durch den Teilnehmer S12 selbst, z.B. über eine mittels eines Browsers (z.B. eines Netscape Navigators) nutzbare Internet-Schnittstelle des Dienst-Steuerknotens SCP. Ein dem Teilnehmer zugeordnetes privates Konto KT12 wird von dem in dem Dienst-Steuerknoten SCP installierten Gebühren-Programm-Modul GPM verwaltet. Das private Konto KT12 kann auch Teil des obengenannten Teilnehmerprofils oder sonstiger in dem Dienst-Steuerknoten SCP abgelegter, teilnehmerspezifischer Daten des Teilnehmers S12 sein. Ferner sind vorliegend in dem Dienst-Steuerknoten SCP auch Restriktionskriterien bezüglich für den Teilnehmer S12 erlaubter Verbindungen gespeichert. So ist z.B. eine Verbindung über das virtuelle private Netz VPN1 zu dem Teilnehmer T211 nicht erlaubt. Wenn der Teilnehmer S12 eine solche Verbindung aufbauen will, muss er eine Abbuchungskennung an die Vermittlungsstelle SW2 senden, dass sein privates Konto KT12 mit den dabei anfallenden Verbindungskosten belastet werden soll. Die Vermittlungsstelle SW2 und der Dienst-Steuerknoten SCP interagieren bei der Belastung des privaten Kontos KT12 beispielsweise in der Weise, wie oben für die Vermittlungsstelle PB22 und den Gebührenserver ACC1 bereits beschrieben worden ist.

Dabei sind prinzipiell mehrere Varianten möglich:

Beispielsweise kann die Belastung des privaten Kontos KT12 ein integrierter IN-Dienst sein (IN = Intelligentes Netz), bei dem die Bearbeitung der Verbindungsanforderungsnachricht zur Verbindung mit dem Endgerät T211 und die Abbuchung des privaten Kontos KT12 in einer Dienstprozedur von der Vermittlungsstelle SW2 und dem Dienst-Steuerknoten SCP interaktiv abgewickelt werden.

Es ist auch möglich, dass die Vermittlungsstelle SW2 und der Dienst-Steuerknoten SCP zunächst die Behandlung des Verbindungswunsches als VPN-IN-Dienst abwickeln. Anschließend wird dieser IN-Dienst sozusagen ein Hintergrund-Prozess und die Vermittlungsstelle SW2 und der Dienst-Steuerknoten SCP wickeln in einem erfindungsgemäßen Prozess interaktiv die Belastung des privaten Kontos KT12 mit den für die Verbindung anfallenden Gebühren ab.

Wenn sich der Teilnehmer S12 mit seinem Endgerät T12 bei der Vermittlungsstelle SW2 als Teilnehmer des virtuellen privaten Netzes VPN2 anmeldet, stellt zwar auch der Dienst-Steuerknoten SCP das für das Netz VPN2 geltende Teilnehmerprofil des Teilnehmers S12 bereit und bearbeitet in Interaktion mit dem Vermittlungsstellen SW1, SW2 die jeweiligen VPN-spezifischen Funktionen. Allerdings ist der Gebührenserver ACC2 zur gegebenenfalls erforderlichen Vergebührung von für private Verbindungen anfallenden Verbindungskosten zuständig.

Bei einer weiteren Fallgestaltung soll eine Verbindung von dem Endgerät T213, das in dem Beispiel als Mitglied des virtuellen privaten Netzes VPN2 auftritt, zu dem Endgerät TX aufgebaut werden, wobei die Verbindungskosten einem durch den Gebührenserver ACC2 verwalteten, nicht dargestellten privaten Konto KT213 des Teilnehmers S213 belastet werden sollen. Diese Verbindung könnte zwar weitgehend über das öffentliche Telekommunikationsnetz PSTN aufgebaut werden, wäre dann aber vergleichsweise teuer. Daher wird die Verbindung bevorzugt auf Übertragungswegen des privaten Telekommunikationsnetzes VPN2 aufgebaut, die zwar vorliegend auch über das Telekommunikationsnetz PSTN führen, jedoch in ihrer Eigenschaft als VPN-Verbindungen kostengünstig für den Teilnehmer S213 sind. Vorliegend wird die Verbindung beispielsweise zunächst auf den Übertragungswegen VB1, VSW,VA zu der dem Netz VPN2 angehörenden Vermittlungsstelle P11 aufgebaut. Diese vervollständigt dann die gewünschte Verbindung auf den Leitungen VA, VX über die Vermittlungsstelle SW1 zu dem Endgerät TX. Dem privaten Konto KT213 werden dabei zweckmäßigerweise nur die für die Verbindung auf den Leitungen VA, VX anfallenden Verbindungskosten berechnet. Es ist aber möglich, dass dem privaten Konto KT213 zudem auch auf Übertragungswegen VB1, VSW,VA anfallende Gebühren berechnet werden.

Weitere Varianten der Erfindung sind ohne Weiteres möglich:

Die als Dienst-Vermittlungsstelle (SSP) dienenden Vermittlungsstellen SW1 und/oder SW2 könnten jeweils mit dem Dienst-Steuerknoten SCP zu einer kombinierten Einrichtung, einem sogenannten Service Switching and Control Point (SSCP) zusammengefasst werden.

Es ist auch möglich, dass die Vermittlungsstelle SW1 eine konventionelle Vermittlungsstelle ist und lediglich die Vermittlungsstelle SW2 ein SSP oder umgekehrt. Von der Vermittlungsstelle SW1 empfangene IN-Dienstanforderungen werden dann von dieser an die Vermittlungsstelle SW2 weitergeleitet, wo sie dann in Interaktion mit dem Dienst-Steuerknoten SCP bearbeitet werden.

Die erfindungsgemäßen Netzknoten, z.B. die Vermittlungsstellen SW1, SW2, PB22, könnten beispielsweise auch sogenannte VoiP-Gateways sein (VolP = Voice over Internet Protocol), die Sprachübertragung und/oder Bildübertragung über das Internet oder ein sonstiges Datennetzwerk ermöglichen. Solche Gateways können zudem auch als erfindungsgemäße Gebühreneinrichtungen ausgestaltet sein, z.B. durch Installation von Gebühren-Programm-Modulen GPM.

Die Teilnehmeranschlussleitungen VA, VB1, VB2 und VB3 könnten auch als DSL-(Digital Subscriber Line) oder Powerline-Teilnehmeranschlussleitungen (= Telekommunikationsverbindungen über das elektrische Energienetz) ausgestaltet sein. Ferner könnten sie WLL-Verbindungen sein (WLL = Wireless Local Loop).

Das Telekommunikationsnetz RPN kann auch weitere Komponenten umfassen, z.B. weitere Endgeräte, die an die Vermittlungsstellen PB21, PB22 oder weitere, nicht dargestellte Vermittlungsstellen angeschlossen sind. Ferner kann das Telekommunikationsnetz RPN z.B. auch zumindest teilweise auf einem LAN (Local Area Network) aufgebaut sein und/oder als Datennetzwerk ausgebildet sein.

Es könnte eine Kombinationseinrichtung aus erfindungsgemäßer Gebühreneinrichtung und erfindungsgemäßem Netzknoten gebildet werden, beispielsweise könnte der Gebührenserver ACC1 z.B. als Programm-Modul oder Einschubkarte in die Vermittlungsstelle PB22 integriert sein. Ferner könnte der Gebührenserver ACC2 in die Vermittlungsstellen SW1 oder SW2 integriert sein.

Die Funktionen einer erfindungsgemäßen privaten Vermittlungsstelle, z.B. der Vermittlungsstelle PB22, könnten durch eine nach außen hin als private Vermittlungsstelle agierende, auch unter dem Begriff "CENTREX" bekannte, öffentliche Vermittlungsstelle geleistet werden, die erfindungsgemäß modifiziert ist.

Es ist auch möglich, dass verteilte lokale Nebenstellennetze zu einem gemeinsamen, z.B. unternehmensweiten Nebenstellennetz oder sogenannten "Privatnetz" verknüpft werden, dessen Endgeräte möglichst über einen unternehmensweiten Rufnummernplan erreicht werden können. Ein solches unternehmensweites Nebenstellennetz kann durch Zusammenschalten verschiedener Nebenstellenanlagen geschaffen werden, z.B. durch Zusammenschalten der Vermittlungsstellen PB11, PB21, PB22, die untereinander über Querverbindungen mit Hilfe sogenannter Querleitungsprotokolle, z.B. des IPNS-Protokolles (ISDN PABX Networking Specification), des QSIG-Protokolles, des ABC-Protokolls der Firma Alcatel oder des CorNet-Protokolls der Firma Siemens kommunizieren. Die Vermittlungsstelle PB11 ist dabei beispielsweise an einem ersten Firmenstandort installiert und PB21, PB22 an einem zweiten Firmenstandort. Wie bei einem VPN kann auch bei einem solchen Privatnetz ein privater Rufnummernplan für die angeschlossenen Teilnehmer, im Beispiel die Teilnehmer S211, S212, S213, S221, S222; S111, S112, S113, aufgestellt werden und durch die Vermittlungsstellen PB11, PB21, PB22 verwaltet und genützt werden.

Beispielsweise dient dann der Gebührenserver ACC1 dem Privatnetz als Gebühreneinrichtung zur Erfassung von für die Teilnehmer S211, S212, S213, S221, S222; S111, S112, S113 anfallenden privaten und/oder geschäftlichen Verbindungskosten und arbeitet z.B. in der oben für das Telekommunikationsnetz RPN beschriebenen Weise. Der Gebührenserver ACC1 kommuniziert mit den Vermittlungsstellen PB11, PB21, PB22 beispielsweise mit einem der genannten Querleitungsprotokolle oder einem sonstigen, z.B. proprietären Protokoll.

Es ist auch möglich, dass das der Gebührenserver ACC2 ein sogenanntes Customer Care and Billing Center (CCBC) ist und neben der erfindungsgemäßen Buchung in üblicher und bekannter Weise Nutzungs-Gebühren für die Nutzung des Telekommunikationsnetzes PSTN auf Konten bucht, die für an das Telekommunikationsnetz PSTN angeschlossene Teilnehmer durch den Gebührenserver ACC2 geführt werden.

Es versteht sich, dass auch beliebige Kombinationen der in den Ansprüchen sowie in der Beschreibung angegebenen Maßnahmen und Anordnungen möglich sind.

## Patentansprüche

1. Verfahren zur Vergebührung von individuellen Verbindungskosten für ein an ein privates Telekommunikationsnetz (VPN1, VPN2, RPN) angeschlossenes Endgerät (T111-T13; T211-T222) eines Teilnehmers, bei dem
- in einer Gebühreneinrichtung (SCP, ACC2, ACC1) des privaten Telekommunikationsnetzes (VPN1, VPN2, RPN) für den Teilnehmer ein privates Konto eingerichtet wird,
- von dem Endgerät (T111-T13; T211-T222) ein Verbindungswunsch zum Aufbau einer Verbindung sowie eine Abbuchungskennung an das private Telekommunikationsnetz (VPN1, VPN2, RPN) gesendet wird, mit der angegeben wird, dass die für die Verbindung anfallenden Verbindungskosten dem privaten Konto (KT211, KT212, KT222) zugerechnet werden sollen, und
- die Gebühreneinrichtung (SCP, ACC2, ACC1) die für die gewünschte Verbindung anfallenden Verbindungskosten dem privaten Konto (KT211, KT212, KT222) zurechnet,
**dadurch gekennzeichnet,**
- **dass** die von dem Teilnehmer gewünschte Verbindung nur dann aufgebaut wird und/oder nur solange gehalten wird, wenn bzw. wie auf dem privaten Konto (KT211, KT212, KT222) ein Guthaben vorhanden ist.

2. Verfahren nach Anspruch 1, **dadurch gekennzeichnet, dass** das private Telekommunikationsnetz (VPN1, VPN2, RPN) anhand vorbestimmter Restriktionskriterien Verbindungswünsche des Teilnehmers zu vorbestimmten Zielen (TX) zurückweist und dass das private Telekommunikationsnetz (VPN1, VPN2, RPN) die Restriktionskriterien nicht oder nur in eingeschränktem Umfang auf den dem privaten Konto (KT211, KT212, KT222) zu belastenden Verbindungswunsch anwendet.

3. Verfahren nach Anspruch 2, **dadurch gekennzeichnet, dass** die Restriktionskriterien den Aufbau der Verbindung über zumindest einen vorbestimmten Übertragungsweg (VNX) an sich verbieten und dass das private Telekommunikationsnetz (VPN1, VPN2, RPN) den Aufbau der Verbindung, deren Verbindungskosten dem privaten Konto (KT211, KT212, KT222) zurechnet werden, über den mindestens einen vorbestimmten Übertragungsweg (VNX) erlaubt.

4. Verfahren nach Anspruch 1, **dadurch gekennzeichnet, dass** das private Telekommunikationsnetz (VPN1, VPN2, RPN) die Verbindung bevorzugt auf einem durch den Teilnehmer vorbestimmten Übertragungsweg (VNX) aufbaut.

5. Verfahren nach Anspruch 1, dass die Gebühreneinrichtung (SCP, ACC2, ACC1) an das Endgerät (T111-T13; T211-T222) eine Nachricht über den jeweiligen Stand des privaten Kontos (KT211, KT212, KT222) sendet, so das Endgerät (T111-T13; T211-T222) den Stand visuell und/oder akustisch dem Teilnehmer anzeigen kann.

6. Verfahren nach Anspruch 1, **dadurch gekennzeichnet, dass** das Endgerät (T111-T13; T211-T222) als Abbuchungskennung oder im Zusammenhang mit dieser eine persönliche, dem Teilnehmer zugeordnete Kennung und/oder ein Passwort an das private Telekommunikationsnetz (VPN1, VPN2, RPN) sendet.

7. Verfahren nach Anspruch 1, **dadurch gekennzeichnet, dass** das private Konto (KT211, KT212, KT222) anonymisiert ist, wobei sich der Teilnehmer bei der Gebühreneinrichtung (SCP, ACC2, ACC1) für einen Zubuchungs- und/oder Abbuchungsvorgang auf das private Konto (KT211, KT212, KT222) bzw. von dem privaten Konto (KT211, KT212, KT222) identifiziert und/oder authentifiziert.

8. Verfahren nach Anspruch 1, **dadurch gekennzeichnet, dass** Gebühren, die für von dem Teilnehmer gewünschte Verbindungen anfallen und dessen privatem Konto (KT211, KT212, KT222) zugerechnet werden, nach einem für das private Telekommunikationsnetz (VPN1, VPN2, RPN) individuell geltenden Gebührentarif ermittelt werden.

9. Verfahren nach Anspruch 1, **dadurch gekennzeichnet, dass** die Verbindung bevorzugt auf Übertragungswegen des privaten Telekommunikationsnetzes (VPN1, VPN2, RPN) aufgebaut wird, insbesondere auf Übertragungswegen zwischen Vermittlungsstellen des privaten Telekommunikationsnetzes (VPN1, VPN2, RPN).

10. Verfahren nach Anspruch 9, **dadurch gekennzeichnet, dass** dem privaten Konto (KT211, KT212, KT222) für außerhalb des privaten Telekommunikationsnetzes (VPN1, VPN2, RPN) aufgebaute Verbindungsabschnitte anfallende Gebühren berechnet werden.

11. Verfahren nach Anspruch 1, **dadurch gekennzeichnet, dass** das private Telekommunikationsnetz (VPN1, VPN2, RPN) ein virtuelles privates Telekommunikationsnetz (VPN1, VPN2) ist und/oder dass das private Telekommunikationsnetz (VPN1, VPN2, RPN) zumindest eine private Vermittlungsstelle (PB11, PB22, PB22) aufweist.

12. Verfahren nach Anspruch 1, **dadurch gekennzeichnet, dass** das private Konto (KT211, KT212, KT222) als Bestandteil eines Teilnehmerprofils des Teilnehmers abgelegt ist, das insbesondere ein persönliches Kurzwahlverzeichnis und/oder ein persönliches Telefonbuch und/oder eine Least-Cost-Routing-Tabelle des Teilnehmers enthält.

13. Knotenpunkt-Programm-Modul (KPM) für einen Netzknoten (SW2, PB22) eines privaten Telekommunikationsnetzes (VPN1, VPN2, RPN), insbesondere für eine Vermittlungsstelle (SW2, PB22) oder ein Gateway, zur Vergebührung von individuellen Verbindungskosten für ein an das private Telekommunikationsnetz (VPN1, VPN2, RPN) angeschlossenes Endgerät (T111-T13; T211-T222) eines Teilnehmers,
- das Programmcode enthält, der von einem Steuermittel (CPUSW, CPUP) des Netzknotens (SW2, PB22) ausgeführt werden kann,
- das Verbindungsmittel (CONKPM) zum Empfangen eines Verbindungswunsches des Endgeräts (T111-T13; T211-T222) zum Aufbau einer Verbindung sowie zum Empfangen einer Abbuchungskennung aufweist, mit der angegeben wird, dass die für die Verbindung anfallenden Verbindungskosten einem privaten Konto (KT211, KT212, KT222) des Teilnehmers zugerechnet werden sollen, wobei die Verbindungsmittel (CONKPM) zum Aufbau der gewünschten Verbindung ausgestaltet sind, und
- das Gebührenerfassungsmittel (COLLKPM) zu Zurechnung von für die gewünschte Verbindung anfallenden Verbindungskosten zu dem privaten Konto (KT211, KT212, KT222) aufweist,
**dadurch gekennzeichnet, dass** die Gebührenerfassungsmittel (COLLKPM) und die Verbindungsmittel (CONKPM) derart zusammenwirken, dass die von dem Teilnehmer gewünschte Verbindung nur dann aufgebaut wird und/oder nur solange gehalten wird, wenn bzw. wie auf dem privaten Konto (KT211, KT212, KT222) ein Guthaben vorhanden ist.

14. Knotenpunkt-Programm-Modul (KPM) nach Anspruch 13, **dadurch gekennzeichnet, dass** die Gebührenerfassungsmittel als eine interne, das private Konto (KT211, KT212, KT222) führende Gebühreneinrichtung (SCP, ACC2, ACC1) ausgestaltet sind und/oder dass die Verbindungsmittel zum Anschließen einer externen, das private Konto (KT211, KT212, KT222) führenden Gebühreneinrichtung (SCP, ACC2, ACC1) ausgestaltet sind sowie dass die Gebührenerfassungsmittel (COLLKPM) und zur interaktiven Vergebührung der anfallenden Verbindungskosten im Zusammenwirken mit der externen Gebühreneinrichtung (SCP, ACC2, ACC1) ausgestaltet sind.

15. Netzknoten (SW2, PB22) eines privaten Telekommunikationsnetzes (VPN1, VPN2, RPN), insbesondere Vermittlungsstelle oder Gateway, zur Vergebührung von individuellen Verbindungskosten für ein an das private Telekommunikationsnetz (VPN1, VPN2, RPN) angeschlossenes Endgerät (T111-T13; T211-T222) eines Teilnehmers,
- der Verbindungsmittel (TRSW, TRPB) zum Empfangen eines Verbindungswunsches des Endgeräts (T111-T13; T211-T222) zum Aufbau einer Verbindung sowie zum Empfangen einer Abbuchungskennung aufweist, mit der angegeben wird, dass die für die Verbindung anfallenden Verbindungskosten einem privaten Konto (KT211, KT212, KT222) des Teilnehmers zugerechnet werden sollen, wobei die Verbindungsmittel (TRSW, TRPB) zum Aufbau der gewünschten Verbindung ausgestaltet sind, und
- der Gebührenerfassungsmittel (CPUSW, CPUP; KPM) zu Zurechnung von für die gewünschte Verbindung anfallenden Verbindungskosten zu dem privaten Konto (KT211, KT212, KT222) aufweist,
**dadurch gekennzeichnet, dass** die Gebührenerfassungsmittel (CPUSW, CPUP; KPM) und die Verbindungsmittel (TRSW, TRPB) derart zusammenwirken, dass die von dem Teilnehmer gewünschte Verbindung nur dann aufgebaut wird und/oder nur solange gehalten wird, wenn bzw. wie auf dem privaten Konto (KT211, KT212, KT222) ein Guthaben vorhanden ist.

16. Gebühren-Programm-Modul (GPM) für eine Gebühreneinrichtung (SCP, ACC2, ACC1) zur Vergebührung von individuellen Verbindungskosten für ein an ein privates Telekommunikationsnetz (VPN1, VPN2, RPN) angeschlossenes Endgerät (T111-T13; T211-T222) eines Teilnehmers, das Programmcode enthält, der von einem Steuermittel (CPUAC) der Gebühreneinrichtung (SCP, ACC2, ACC1) und/oder von einem Steuermittel (CPUSW, CPUP) eines Netzknotens (SW2, PB22) des privaten Telekommunikationsnetzes (VPN1, VPN2, RPN) ausgeführt werden kann, **dadurch gekennzeichnet, dass** das Gebühren-Programm-Modul (GPM) Kontoführungsmittel (ACCGPM) zur Führung eines privaten Kontos (KT211, KT212, KT222) des Teilnehmers aufweist, dass die Kontoführungsmittel (ACCGPM) zur Aufbuchung eines Guthabens ausgestaltet sind, dass die Kontoführungsmittel (ACCGPM) zur Abbuchung von Verbindungskosten ausgestaltet sind, die für eine von dem Endgerät (T111-T13; T211-T222) zusammen mit einer Abbuchungskennung für das private Konto (KT211, KT212, KT222) gewünschte und von dem privaten Telekommunikationsnetz (VPN1, VPN2, RPN) aufgebaute Verbindung anfallen, und dass die Kontoführungsmittel (ACCGPM) derart zur Zusammenwirkung mit dem privaten Telekommunikationsnetz (VPN1, VPN2, RPN), insbesondere mit einem Netzknoten (SW2, PB22) des privaten Telekommunikationsnetzes (VPN1, VPN2, RPN), ausgestaltet sind, dass die von dem Teilnehmer gewünschte Verbindung nur dann aufgebaut wird und/oder nur solange gehalten wird, wenn bzw. wie auf dem privaten Konto (KT211, KT212, KT222) ein Guthaben vorhanden ist.

17. Gebühreneinrichtung (SCP, ACC2, ACC1) zur Vergebührung von individuellen Verbindungskosten für ein an ein privates Telekommunikationsnetz (VPN1, VPN2, RPN) angeschlossenes Endgerät (T111-T13; T211-T222) eines Teilnehmers, **dadurch gekennzeichnet, dass** die Gebühreneinrichtung (SCP, ACC2, ACC1) Kontoführungsmittel (CPUAC, GPM) zur Führung eines privaten Kontos (KT211, KT212, KT222) des Teilnehmers aufweist, dass die Kontoführungsmittel zur Aufbuchung eines Guthabens ausgestaltet sind, dass die Kontoführungsmittel (GPM) zur Abbuchung von Verbindungskosten ausgestaltet sind, die für eine von dem Endgerät (T111-T13; T211-T222) zusammen mit einer Abbuchungskennung für das private Konto (KT211, KT212, KT222) gewünschte und von dem privaten Telekommunikationsnetz (VPN1, VPN2, RPN) aufgebaute Verbindung anfallen, und dass die Kontoführungsmittel (CPUAC, GPM) derart zur Zusammenwirkung mit dem privaten Telekommunikationsnetz (VPN1, VPN2, RPN), insbesondere mit einem Netzknoten (SW2, PB22) des privaten Telekommunikationsnetzes (VPN1, VPN2, RPN), ausgestaltet sind, dass die von dem Teilnehmer gewünschte Verbindung nur dann aufgebaut wird und/oder nur solange gehalten wird, wenn bzw. wie auf dem privaten Konto (KT211, KT212, KT222) ein Guthaben vorhanden ist.

18. Speichermittel, insbesondere Diskette, CD-ROM, Digital Versatile Disc, Festplattenlaufwerk oder dergleichen, mit einem darauf Knotenpunkt-Programm-Modul (KPM) nach Anspruch 13 und/oder einem darauf gespeicherten Gebühren-Programm-Modul (GPM) nach Anspruch 16.
